# EUROPÄISCHE PATENTANMELDUNG

(11) **EP 1 804 144 A1**
(43) Veröffentlichungstag der Anmeldung: **04.07.2007**
(21) Anmeldenummer: 06126023.8
(22) Anmeldetag: 13.12.2006
(51) Int. Cl.: G05B 19/042, G05B 23/02, F02D 41/26, G06F 21/00

(54) **Überprüfung des Steuerprogramms eines Steuergerätes für eine Maschine**

(30) Priorität: 20.12.2005 DE 102005060902
(71) Anmelder: ROBERT BOSCH GMBH, 70442 Stuttgart (DE)
(72) Erfinder: Neufeld, Marc, 71638 Ludwigsburg (DE); Hummel, Juergen, 71665 Vaihingen (DE)

(57) **Zusammenfassung**

Ein Steuergerät (12) für eine Maschine (10) umfasst einen Prozessor (1), einen Speicher (3, 4, 5) für Programmanweisungen und Parameterwerte. Ein erster Teil der Programmanweisungen definiert einen ersten Prozess (S8), der auf die Parameterwerte zugreift, um Steuerinformationen festzulegen und an die Maschine zu senden, und ein zweiter Teil definiert einen zweiten Prozess, der die Güte der Anwendungsdaten beurteilt (S5, S6) und anhand des Beurteilungsergebnisses die Ausführung des ersten Prozesses (S8) zulässt oder verhindert. Der zweite Prozess überprüft zum Beurteilen der Güte der Anwendungsdaten den Wert wenigstens eines ersten durch die Anwendungsdaten spezifizierten physikalischen Parameters auf seine Zulässigkeit und lässt das Ausführen des ersten Prozesses (S8) unter Verwendung dieser Anwendungsdaten nur zu, wenn der Wert des Parameters für zulässig befunden wird.

## Beschreibung

### Stand der Technik

Die vorliegende Erfindung betrifft ein Steuergerät für eine Maschine, insbesondere aber nicht ausschließlich für eine Kraftmaschine eines Kraftfahrzeugs. Ein solches Steuergerät umfasst im allgemeinen einen Prozessor und einen Speicher für Anwendungsdaten, d. h. Programmanweisungen und Parameterwerte, wobei die Programmanweisungen wenigstens einen ersten Prozess, hier auch als Anwendungsprozess bezeichnet, definieren, der unter anderem auf die Parameterwerte zugreift, um Steuerinformationen festzulegen und an die Maschine zu senden, um deren Betrieb zu steuern.

Insbesondere bei Steuergeräten, die im Kfz-Sektor eingesetzt werden, wird oft von Unbefugten versucht, Anwendungsdaten zu manipulieren, um so zum Beispiel die Leistung einer von dem Steuergerät gesteuerten Kraftmaschine zu steigern. Solche vom Fahrzeugkonstrukteur nicht vorgesehenen Leistungssteigerungen können die Betriebsicherheit des Fahrzeugs gefährden, zu einer Verkürzung der Lebensdauer der Kraftmaschine oder des Getriebes führen oder die Grundlagen für die Straßenverkehrszulassung des Fahrzeugs in Frage stellen. Es ist daher wichtig, den Betrieb eines solchen Steuergeräts unter Verwendung von möglicherweise sicherheitsgefährdenden Anwendungsdaten zuverlässig zu unterbinden.

Es sind Integritätsprüfverfahren bekannt, bei denen aus einer Menge von Daten beliebigen Typs eine Integritätsprüfinformation berechnet und mit einer früher berechneten und abgespeicherten Referenz-Prüfinformation verglichen wird. Wenn neu berechnete und Referenz-Prüfinformationen nicht übereinstimmen, erlaubt dies den Rückschluss, dass die Daten verfälscht worden sind, und dass ihre Verwendung nicht sicher ist, und die Ausführung eines Anwendungsprozesses, der auf die verfälschten Daten zugreift, wird unterbunden. Auf diese Weise lässt sich die Wahrscheinlichkeit, dass mit von einem unbefugten Dritten manipulierten Daten gearbeitet wird, stark verringern. Ein solcher Ansatz liefert jedoch keinen Schutz davor, dass der Anwendungsprozess des Steuergeräts mit Anwendungsdaten arbeitet, die von einem Befugten erzeugt und zusammen mit einer passenden Integritätsprüfinformation abgespeichert worden sind, die aber dennoch Algorithmen oder Werte von Betriebsparametern spezifizieren, bei denen ein sicherer Betrieb der Maschine nicht gewährleistet ist. Zu einer solchen Situation kann es um so leichter kommen, je größer die Zahl der physikalischen Parameter ist, die das Steuergerät an der von ihm gesteuerten Maschine erfassen oder einstellen muss und die miteinander in Wechselbeziehung stehen, so dass für sie nicht beliebige Kombinationen von Werten durch die Anwendungsdaten spezifiziert werden dürfen.

Um derartige Probleme zu vermeiden, sind Verfahren zu automatischen Erkennen von sicherheitskritischen Parameterwerten in einem Satz von Anwendungsdaten entwickelt worden. Sicherheitskontrollen anhand derartiger Verfahren werden üblicherweise in einer Entwicklungsumgebung, in der die Anwendungsdaten erzeugt worden sind, vor dem Übertragen der Anwendungsdaten in einen Speicher des Steuergeräts ausgeführt, um von vornherein zu vermeiden, dass unsichere Daten an das Steuergerät übertragen werden.

Ein Nachteil an diesem Ansatz ist jedoch, dass es nach dem Übertragen der Anwendungsdaten auf das Steuergerät keine Möglichkeit mehr gibt, am Steuergerät selbst nachzuprüfen, ob eine solche Sicherheitskontrolle stattgefunden hat oder nicht. Dies macht es für den Hersteller des Steuergeräts schwierig, nachzuweisen, dass eine Sicherheitskontrolle stattgefunden hat, wenn er für einen angeblich von dem Steuergerät verursachten Schaden verantwortlich gemacht wird.

### Vorteile der Erfindung

Durch die vorliegende Erfindung wird ein Steuergerät geschaffen, das die Gefahr eines Betriebs mit ungeeigneten Anwendungsdaten, sowohl solchen, die von einem Unbefugten manipuliert sind, als auch von solchen, die von einem Befugten erzeugt, aber nicht auf ihre Sicherheit überprüft sind, verhindert.

Dies wird erfindungsgemäß erreicht, indem als ein zweiter Prozess anstelle einer lediglich die Binärwerte der Anwendungsdaten berücksichtigenden Integritätsprüfung eine Überprüfung des Werts wenigstens eines ersten durch die Anwendungsdaten repräsentierten physikalischen Parameters auf seine Zulässigkeit von dem Steuergerät selbst durchgeführt wird und die Ausführung des Anwendungsprozesses, im folgenden auch als erster Prozess bezeichnet, nur dann zugelassen wird, wenn der Wert des Parameters für zulässig befunden wird.

Im Gegensatz zu Binärdaten, die von Natur aus diskret sind und als ganzzahlig aufgefasst werden können, sind die von den Anwendungsdaten repräsentierten physikalischen Parameter häufig reellwertig. Bei solchen Parametern ist es nicht sinnvoll, einen Wert nur dann als zulässig anzusehen, wenn er exakt mit einer Vorgabe übereinstimmt; daher umfasst die Prüfung auf Zulässigkeit zweckmäßigerweise einen Schritt des Prüfens, ob der Wert des Parameters in ein als zulässig angenommenes Werteintervall fällt.

Wenn die Anwendungsdaten eine Mehrzahl von Werten physikalischer Parameter enthalten, so stehen diese häufig in einer Wechselwirkung dahingehend, dass die Frage, ob ein bestimmter Wert eines ersten Parameters zulässig ist bzw. einen sicheren Betrieb der Maschine ermöglicht, von ein oder mehreren ebenfalls in den Anwendungsdaten enthaltenen Werten abhängt. Ein solcher Zusammenhang wird in einem Steuergerät herkömmlicherweise oft durch eine in dem Steuergerät gespeicherte Kennkurve oder Schar von Kennkurven beschrieben, die einen gewünschten Wert des ersten Parameters in Abhängigkeit von gleichzeitigen Werten eines oder mehrerer anderer Parameter spezifizieren. Es ist daher zweckmäßig, dass der zweite Prozess eine Vorschrift zum Berechnen eines zulässigen Wertes oder Wertebereichs des ersten Parameters anhand wenigstens eines zweiten durch die Anwendungsdaten repräsentierten Wertes eines physikalischen Parameters - oder, mit anderen Worten, eine Vorschrift zum Berechnen eines Punktes der Kennkurve - umfasst.

Einer ersten Ausgestaltung der Erfindung zufolge ist vorgesehen, dass der zweite Prozess zum Beurteilen der Güte der Anwendungsdaten die Anwendungsdaten aus dem Speicher liest. Das heißt, die zu beurteilenden Anwendungsdaten befinden sich bereits im dem Steuergerät, wenn das Verfahren ausgeführt wird.

Ein solcher zweiter Prozess kann zweckmäßigerweise in einer Vorbereitungsphase zwischen dem Einschalten des Steuergeräts und dem Ausführen des ersten Prozesses ausgeführt werden, um die Ausführung des ersten Prozesses von vornherein zu verhindern, wenn die Beurteilung der Güte der Anwendungsdaten negativ ausfällt.

Möglich ist auch, die Beurteilung der Güte der Anwendungsdaten in einer Nachbereitungsphase zwischen dem Ausführen des ersten Prozesses und dem Ausschalten des Steuergeräts auszuführen. In einem solchen Fall muss das Beurteilungsergebnis im ausgeschalteten Zustand des Steuergeräts gespeichert bleiben, damit es beim Wiedereinschalten zur Verfügung steht. Diese Variante kann insbesondere zweckmäßig sein, wenn der erste Prozess in der Lage ist die Betriebsdaten zu ändern, oder wenn spontane Änderungen der Betriebsdaten auf Grund einer Fehlfunktion wie etwa eines Flash-Kippers erkannt und abgefangen werden sollen.

Wenn spontane oder vom ersten Prozess bewirkte Änderungen der Betriebsdaten erkannt und abgefangen werden sollen, ist auch eine zyklische Ausführung des zweiten Prozesses während der Laufzeit des Steuergeräts sinnvoll.

Einer zweiten Ausgestaltung zufolge ist vorgesehen, dass der zweite Prozess zum Beurteilen der Güte der Anwendungsdaten diese aus einer externen Quelle empfängt und sie nur dann in den Speicher einträgt, wenn der Wert jedes ersten durch die Anwendungsdaten repräsentierten physikalischen Parameters zulässig ist. Auf diese Weise kann jeder Versuch unterbunden werden, das Steuergerät mit Anwendungsdaten zu programmieren, die keinen sicheren Betrieb erlauben. Da die als nicht brauchbar beurteilten Anwendungsdaten bei dieser Ausgestaltung gar nicht erst in den Speicher gelangen, ist die Ausführung des ersten Prozesses mit diesen Anwendungsdaten per se blockiert, ohne dass hierzu weitere Verfahrensschritte oder Vorkehrungen erforderlich sind.

Wenn sich zum Zeitpunkt des Versuchs, die Anwendungsdaten aus der externen Quelle in den Speicher zu laden, bereits ein als brauchbar beurteilter Satz von Anwendungsdaten darin befindet, kann das Steuergerät die Ausführung des ersten Prozesses mit diesen bereits zuvor gespeicherten Anwendungsdaten weiterhin zulassen, nachdem es die neuen Anwendungsdaten von der externen Quelle als unbrauchbar verworfen hat.

Zweckmäßig ist auch, dass der zweite Prozess zusammen mit den Anwendungsdaten ein anhand der Anwendungsdaten berechnetes Prüfdatum speichert.

Dieses Prüfdatum kann insbesondere außerhalb des Steuergeräts nach einem geheim gehaltenen Verfahren berechnet und zusammen mit den Anwendungsdaten über die Schnittstelle an das Steuergerät übertragen sein. In diesem Fall hat das Prüfdatum während des normalen Betriebs des Steuergeräts nicht notwendigerweise eine Funktion; es kann aber eventuell zu einem späteren Zeitpunkt aus dem Speicher gelesen und auf seine Kompatibilität mit den gleichzeitig gespeicherten Betriebsdaten überprüft werden, um im Falle einer Nichtkompatibilität den Nachweis führen zu können, dass die Betriebsdaten von einem Unbefugten manipuliert worden sind.

Es kann aber auch der zweite Prozess eingerichtet sein, das Prüfdatum anhand der gespeicherten Anwendungsdaten neu zu berechnen und die Ausführung des ersten Prozesses zu sperren, wenn eine Nichtkompatibilität des neu berechneten mit dem gespeicherten Prüfdatum darauf hinweist, dass die Betriebsdaten, aus denen das Prüfdatum berechnet wurde, manipuliert sind.

Alternativ kann das Prüfdatum auch in dem zweiten Prozess vom Steuergerät selbst anhand von an es übertragenen Anwendungsdaten berechnet und abgespeichert werden, wenn die Überprüfung des Werts des wenigstens einen durch die Anwendungsdaten spezifizierten physikalischen Parameters dessen Zulässigkeit ergeben hat. Das Vorhandensein des Prüfdatums zeigt somit an, dass eine Sicherheitskontrolle erfolgreich durchgeführt wurde, und eine erneute Sicherheitskontrolle ist nur erforderlich, wenn eine Integritätsprüfung der Anwendungsdaten zeigt, dass diese verändert wurden. Die aufwändige Sicherheitskontrolle braucht daher jeweils nur einmal durchgeführt zu werden, wenn neue Anwendungsdaten in das Steuergerät geladen wurden, danach genügt eine einfache Integritätsprüfung, um sicherzustellen, dass die Anwendungsdaten betriebssicher sind.

Weitere Merkmale und Vorteile der Erfindung ergeben sich aus der nachfolgenden Beschreibung von Ausführungsbeispielen unter Bezugnahme auf die beigefügten Figuren.

### Figuren

Es zeigen:
- Fig. 1: ein Blockdiagramm eines erfindungsgemäßen Steuergeräts;
- Fig. 2: ein Flussdiagramm eines Arbeitsverfahrens des Steuergeräts aus Fig. 1 und
- Fig. 3: ein Flussdiagramm eines alternativen Arbeitsverfahrens des Steuergeräts aus Fig. 1.

### Beschreibung der Ausführungsbeispiele

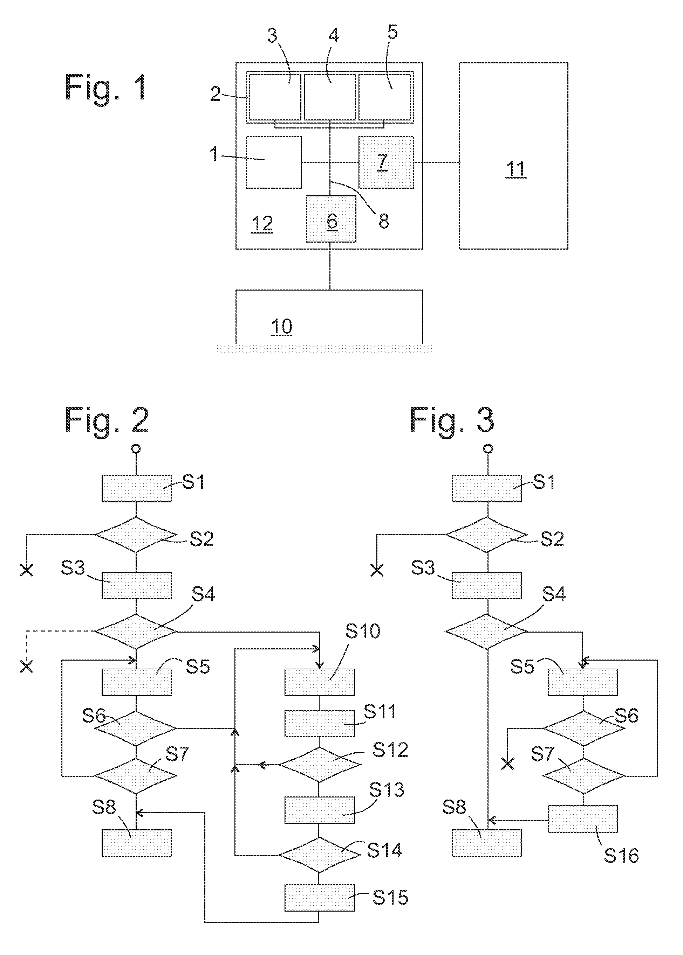

Das in Fig. 1 allgemein mit 12 bezeichnete Steuergerät umfasst einen Mikroprozessor 1, einen Speicher 2, der aus einer Mehrzahl von Bausteinen, wie etwa einem flüchtigen Speicher mit wahlfreiem Zugriff (RAM) 3, einem Nur-Lesespeicher (ROM) 4 und einem elektrisch überschreibbaren Festwertspeicher, insbesondere einem Flash-Speicher 5, zusammengesetzt sein kann, ein oder mehrere Schnittstellen für die Kommunikation mit Sensoren und Aktoren an einer zu steuernden Maschine 10, zusammenfassend als Maschinenschnittstelle 6 bezeichnet, und eine mit einer externen Datenquelle wie etwa einem Host-Computer 11 oder einem Werkstatt-Diagnosegerät verbindbare Programmierschnittstelle 7, die untereinander durch einen Bus 8 verbunden sind.

Als Anwendungsbeispiel soll im Folgenden der Fall betrachtet werden, dass die Maschine 10 ein Motor eines Kraftfahrzeugs und das Steuergerät 12 ein Motorsteuergerät ist. Im ROM 4 und/oder Flash 5 ist ein Anwendungsprogramm gespeichert, dass den Mikroprozessor 1 befähigt, den Motor 10 zu steuern, zum Beispiel durch Einstellen des Zündwinkels im Motor 10, der Kraftstoffzumessung und anderer Größen in Abhängigkeit von einer erfassten Motorlast, Fahrpedalstellung, etc. Um die Steuerung durchzuführen, greift der Mikroprozessor 1 auf im Flash 5 gespeicherte Parameterwerte zu, die einen von dem Mikroprozessor zu steuernden Zusammenhang zwischen am Kraftfahrzeug erfassten physikalischen Parametern und am Motor einzustellenden Parametern beschreiben. Nur wenn die Werte dieser Parameter in einem sinnvollen Verhältnis zueinander stehen, ist ein ordnungsgemäßer, sicherer Betrieb des Motors 10 möglich. Es muss daher zum Beispiel sicher gestellt sein, dass nicht ein beliebiger Unbefugter über die Maschinenschnittstelle 6 neue Werte dieser Größen von zweifelhafter Brauchbarkeit in den Speicher lädt. Es kann aber auch nicht a priori ausgeschlossen werden, dass von an sich befugter Seite, während der Herstellung des Steuergerätes oder seiner Anpassung and die zu steuernde Maschine oder bei Wartungsarbeiten, Parameterwerte in das Steuergerät geladen werden, die keinen sicheren Betrieb mehr gewährleisten. Um dies zu vermeiden, arbeitet das Steuergerät in der im Folgenden anhand des Flussdiagramms der Fig. 2 beschriebenen Weise.

Die nachfolgende Beschreibung differenziert zwischen einem ersten und einem zweiten Prozess, wobei zu dem ersten Prozess all diejenigen Arbeitschritte gezählt werden, die unmittelbar mit der Steuerung des Motors 10 zu tun haben und die zum Steuern des Motors 10 ausreichend wären, wenn keine Gefahr der Fehlerhaftigkeit der Betriebsdaten, sei es durch fehlerhafte Eingabe oder auf Grund einer technischen Störung im Steuergerät abgewehrt werden müsste, während zu einem zweiten Prozess all diejenigen Aufgaben gezählt werden, die dazu dienen, die Brauchbarkeit der Anwendungsdaten sicher zu stellen, auf die der erste Prozess zurückgreift.

Für die Beschreibung des Verfahrens der Fig. 2 wird davon ausgegangen, dass das Steuergerät zu Beginn des Verfahrens fertig montiert und programmiert ist. Programmanweisungen zum Ausführen beider Prozesse sind im ROM 4 ablegt; ein wesentlicher Teil der Programmanweisungen des zweiten Prozesses beinhaltet Algorithmen, die es erlauben, einen zulässigen Wertebereich eines ersten durch die Anwendungsdaten repräsentierten physikalischen Parameters anhand von in den Anwendungsdaten enthaltenen Werten anderer Parameter zu berechnen.

In einem ersten Schritt S1 des Verfahrens der Fig. 2, unmittelbar nach dem Einschalten des Steuergeräts, liest der Mikroprozessor 1 aus dem ROM 4 wenigstens einen Teil der die Regeln zum Berechnen der zulässigen Werte oder Wertebereiche verkörpernden Algorithmen, wobei die gelesenen Anweisungen zunächst als binäre Datenwörter in arithmetischen Operationen verarbeitet werden, um einen Prüfdatenwert, zum Beispiel eine Prüfsumme, zu erhalten. Dieser Prüfdatenwert wird im Schritt S2 mit einem ebenfalls aus dem ROM 4 gelesenen Datum verglichen, das einen zu einem früheren Zeitpunkt berechneten Prüfdatenwert darstellt. Dieser Prüfdatenwert kann zum Beispiel zusammen mit den Algorithmen von einer externen Quelle aus an das Steuergerät 12 übertragen und dort gespeichert worden sein; denkbar ist aber auch, dass das Steuergerät lediglich die Anwendungsdaten von der äußeren Quelle über die Programmierstelle 7 empfängt und den Prüfdatenwert selbst aus den empfangenen Daten berechnet und abspeichert.

Stimmen der berechnete und der gespeicherte Prüfdatenwert nicht überein, so bedeutet dies, dass die Algorithmen im ROM 4 verändert worden sind, und dass somit nicht gewährleistet ist, dass sie noch ihren Zweck erfüllen können. In diesem Fall bricht der Mikroprozessor 1 die Verarbeitung ab und bleibt stehen.

Stimmen der in Schritt S1 berechnete Prüfdatenwert und der gespeicherte überein, so wird angenommen, dass die Algorithmen nicht manipuliert sind, und die Verarbeitung geht weiter zu Schritt S3, wo eine Integritätsprüfung an den Parameterwerten in gleicher Weise wie in Schritt S1 an den Algorithmen vorgenommen wird. Der erhaltene Prüfdatenwert wird in Schritt S4 mit einem zuvor gespeicherten verglichen, der wie der die Algorithmen betreffende Prüfdatenwert von außen an das Steuergerät übertragen oder vom Mikroprozessor selbst berechnet sein kann. Wenn die Überprüfung ergibt, dass die Parameterwerte verändert worden sind, so verzweigt das Steuergerät in einen Programmiermodus, dessen erster Schritt S10 darin beruht, dass der Mikroprozessor 1 auf die Übertragung von Anwendungsdaten an ihn über die Maschinenschnittstelle 6 wartet. Indem der Mikroprozessor so in den Wartezustand versetzt wird, wird er daran gehindert, unter Verwendung der vermutlich verfälschten Parameterwerte den Motor 10 zu steuern.

Der Mikroprozessor 1 kann ferner von der Programmierschnittstelle 7 jederzeit in den Wartezustand des Schritts S10 versetzt werden, wenn die Programmierschnittstelle 7 erfasst, dass sie mit einer zum Senden von Anwendungsdaten bereiten Quelle verbunden ist.

Wenn auch der aus den Parameterwerten berechnete Prüfdatenwert keinen Hinweis auf Manipulation liefert, geht das Verfahren von Schritt S4 nach S5 über. In Schritt S5 werden die in Schritt S1 auf ihre Unversehrtheit überprüften Algorithmen eingesetzt, um anhand von in den Parameterwerten enthaltenen Werten wenigstens eines am Motor gemessenen physikalischen Parameters zulässige Werte wenigstens eines anderen Parameters zu berechnen. Vorzugsweise ist der wenigstens eine andere Parameter reellwertig, und das Ergebnis der Berechnung in Schritt S5 ist ein zulässiges Werteintervall für diesen Parameter. In Schritt S6 wird geprüft, ob der in den Anwendungsdaten spezifizierte Wert dieses anderen Parameters in das berechnete Intervall fällt oder nicht. Wenn nicht, geht der Prozessor in den Wartezustand des Schritts S10 über; wenn doch, wird in Schritt S7 geprüft, ob noch ein weiterer Parameter existiert, für den anhand der Anwendungsdaten ein zulässiger Wertebereich berechnet werden kann. Wenn ja, kehrt das Verfahren für diesen Parameter zu Schritt S5 zurück; wenn nein, so ist die Überprüfung der Zulässigkeit der Parameterwerte abgeschlossen, und es steht fest, dass die Anwendungsdaten sicher verwendet werden können. Erst nun beginnt der Prozessor, seine eigentliche Aufgabe des Steuerns des Motors 10, in dem Diagramm zusammengefasst als Schritt S8, auszuführen.

Fakultativ wird die Ausführung des Schritts S8 von Zeit zu Zeit, beispielsweise gesteuert durch einen Zeitgeber oder wenn der Prozessor nicht ausgelastet ist, unterbrochen, um die Schritte S5 und S6 für einzelne oder alle Parameterwerte zu wiederholen. Auf diese Weise kann auch eine Änderung der Parameterwerte, die während des Betriebs des Steuergerätes auftritt, zum Beispiel auf Grund einer Manipulation durch einen Unbefugten oder auf Grund einer technischen Störung wie etwa eines Flash-Kippers, erkannt werden. In einer solchen Situation, bei laufendem Motor 10, ist die Reaktion allerdings zweckmäßigerweise nicht ein Übergang in den Wartezustand S10, in dem die Ausführung der Motorsteuerung S8 vollends unterbunden ist, sondern der Übergang in einen abgesicherten Modus, in welchem der Motor zwar am Laufen gehalten wird, in dem aber Betriebszustände des Motors, die bei fehlerhaften Betriebsdaten gefahrengeneigt sind, insbesondere bei hohen Motorleistungen, gesperrt werden.

In dem Programmiermodus verharrt der Mikroprozessor 1 im Wartezustand des Schritts S10, bis in Schritt S11 Daten über die Programmierschnittstelle 7 vom Host-Computer 11 empfangen werden. Diese Anwendungsdaten werden zunächst im RAM 3 abgelegt. Um die Berechtigung des Host-Computers zum Programmieren des Steuergeräts zu überprüfen, kann der Schritt S12 vorgesehen werden, in welchem ein Integritätsprüfwert der neuen Anwendungsdaten berechnet und mit dem bereits in Schritt S4 verwendeten, vorab gespeicherten Integritätsprüfwert verglichen wird. Wenn die Prüfwerte nicht übereinstimmen, verwirft der Mikroprozessor die neu empfangenen Anwendungsdaten im RAM 3 und kehrt zurück zu Schritt S10.

Da sich unter den Anwendungsdaten auch solche befinden, die vom Prozessor für die Motorsteuerung des Schritts S8 nicht benötigt werden und daher beliebige Werte haben können, ist es für einen befugten Programmierer kein Problem, die neu an das Steuergerät 12 zu übertragenden Anwendungsdaten so zusammen zu stellen, dass sie im Schritt S12 akzeptiert werden.

Wenn der Host-Computer 11 somit als zum Programmieren des Steuergeräts berechtigt akzeptiert worden ist, berechnet der Mikroprozessor in Schritt S13 in analoger Weise wie zuvor in Schritt S5 zulässige Bereiche für wenigstens einen ersten Parameter anhand von in den neuen Anwendungsdaten enthaltenen Angaben über die Werte anderer Parameter und prüft, ob ein ebenfalls in den Anwendungsdaten spezifizierter Wert des ersten Parameters in das berechnete Intervall hineinfällt (S15).

Wenn für einen in den neuen Anwendungsdaten spezifizierten Parameter festgestellt wird, dass er nicht in den zulässigen Wertebereich fällt, so werden die neuen Anwendungsdaten verworfen, und der Mikroprozessor kehrt in den Wartezustand S10 zurück. Nur wenn alle überprüften Werte aus den Anwendungsdaten in die für sie berechneten zulässigen Intervalle fallen, wird der Schritt S14 erreicht, in welchem der Flash-Speicher 5 mit den neuen Anwendungsdaten überschrieben wird.

Anschließend wird der Steuerbetrieb des Motors (S8) mit den veränderten Anwendungsdaten wieder aufgenommen.

Ein alternatives Arbeitsverfahren des Steuergeräts ist in Fig. 3 dargestellt. Die Schritte S1 bis S3 dieses Verfahrens sind die gleichen wie in Fig. 2 und werden nicht erneut beschrieben. Der in Schritt S3 erhaltene Prüfdatenwert wird in Schritt S4 mit dem Inhalt eines vorgegebenen Speicherplatzes verglichen. Wenn Übereinstimmung festgestellt wird, bedeutet dies, dass die Parameterwerte nicht manipuliert sind, und das Steuergerät geht unmittelbar zum ersten Prozess (Schritt S8) über. Nichtübereinstimmung zeigt an, dass die Parameterwerte verändert wurden, wobei die Veränderung sowohl darin beruhen kann, dass vorhandene Werte von einem Befugten oder einem Unbefugten manipuliert wurden, oder dass überhaupt erstmalig Parameterwerte in das Flash 5 geschrieben wurden. Egal, welches die Ursache für die Nichtübereinstimmung ist, führt das Steuergerät die mit Bezug auf die Schritte S5 bis S7 von Fig. 2 beschriebene Sicherheitskontrolle aus. Liegt ein Parameterwert nicht im zulässigen Bereich, so bricht das Verfahren ab, und der Mikroprozessor 1 bleibt stehen. Wenn das Ergebnis dieser Prüfung ist, dass die Parameterwerte sicher sind, wird Schritt S16 erreicht, in dem der in Schritt S3 erhaltene Prüfdatenwert an den in Schritt S4 abgefragten Speicherplatz eingetragen wird, so dass bei späteren Wiederholungen des Arbeitsverfahrens in Schritt S4 so lange Übereinstimmung festgestellt wird, bis die Parameterwerte aus irgendeinem Grund verändert werden. Anschließend geht der Mikroprozessor 1 zum ersten Prozess des Schritts S8 über.

Die oben beschriebenen Verfahren können einheitlich auf die Gesamtheit aller Parameterwerte, mit denen der Mikroprozessor arbeitet, angewendet werden. Es ist aber auch möglich, sie jeweils einzeln auf Teilbereiche des Flash-Speichers 5 anzuwenden, die bestimmte, für gewisse Teilaufgaben des Motorsteuergeräts benötigte Parameterwerte enthalten, mit der Folge, dass, wenn nur in einem Teilbereich manipulierte, unzulässige Parameterwerte gefunden werden, das Steuergerät nicht komplett gesperrt werden muss, sondern nur diejenigen seiner Funktionen, die von den unzulässigen Parameterwerten betroffen sind.

## Patentansprüche

1. Steuergerät (12) für eine Maschine (10), mit einem Prozessor (1), einem Speicher (3, 4, 5) für Programmanweisungen und Parameterwerte, gemeinsam als Anwendungsdaten bezeichnet, bei dem ein erster Teil der Programmanweisungen einen ersten Prozess (S8) definiert, der auf die Parameterwerte zugreift, um Steuerinformationen festzulegen und an die Maschine zu senden, und ein zweiter Teil einen zweiten Prozess definiert, der die Güte der Anwendungsdaten beurteilt (S5, S6) und anhand des Beurteilungsergebnisses die Ausführung des ersten Prozesses (S8) zulässt oder verhindert, **dadurch gekennzeichnet, dass** der zweite Prozess zum Beurteilen der Güte der Anwendungsdaten den Wert wenigstens eines ersten durch die Anwendungsdaten spezifizierten physikalischen Parameters auf seine Zulässigkeit überprüft und das Ausführen des ersten Prozesses (S8) unter Verwendung dieser Anwendungsdaten nur zulässt, wenn der Wert des Parameters für zulässig befunden wird.

2. Steuergerät nach Anspruch 1, **dadurch gekennzeichnet, dass** der Wert für zulässig befunden wird (S6), wenn er in ein zulässiges Werteintervall fällt.

3. Steuergerät nach Anspruch 1 oder 2, **dadurch gekennzeichnet, dass** der zweite Prozess eine Vorschrift zum Berechnen (S5) eines zulässigen Wertes oder Wertebereichs des ersten Parameters anhand wenigstens eines zweiten durch die Anwendungsdaten repräsentierten Werts eines physikalischen Parameters umfasst.

4. Steuergerät nach einem der vorhergehenden Ansprüche, **dadurch gekennzeichnet, dass** zum Beurteilen der Güte der Anwendungsdaten der zweite Prozess die Anwendungsdaten aus dem Speicher (5) liest.

5. Steuergerät nach Anspruch 4, **dadurch gekennzeichnet, dass** es eingerichtet ist, den zweiten Prozess in einer Vorbereitungsphase zwischen dem Einschalten des Steuergeräts und dem Ausführen des ersten Prozesses (S8) auszuführen.

6. Steuergerät nach Anspruch 4, **dadurch gekennzeichnet, dass** es eingerichtet ist, die Beurteilung der Güte der Anwendungsdaten in einer Nachbereitungsphase zwischen dem Ausführen des ersten Prozesses und dem Ausschalten auszuführen und das Beurteilungsergebnis im ausgeschalteten Zustand des Steuergeräts (12) zu speichern.

7. Steuergerät nach einem der Ansprüche 4 bis 6, **dadurch gekennzeichnet, dass** es eingerichtet ist, den zweiten Prozess zyklisch auszuführen.

8. Steuergerät nach einem der Ansprüche 1 bis 3, **dadurch gekennzeichnet, dass** es eine Schnittstelle (7) zum Empfangen von Anwendungsdaten von einer externen Quelle (11) umfasst und dass zum Beurteilen der Güte der Anwendungsdaten der zweite Prozess (S8) die Anwendungsdaten von der externen Quelle (11) über die Schnittstelle (7) empfängt und die Anwendungsdaten nur dann in den Speicher (5) einträgt, wenn der Wert jedes ersten durch die Anwendungsdaten repräsentierten physikalischen Parameters zulässig ist.

9. Steuergerät nach Anspruch 8, **dadurch gekennzeichnet, dass** wenn der Wert wenigstens eines durch die Anwendungsdaten repräsentierten physikalischen Parameters unzulässig ist, der zweite Prozess die über die Schnittstelle empfangenen Anwendungsdaten verwirft und die Ausführung des ersten Prozesses mit bereits zuvor in dem Speicher gespeicherten Anwendungsdaten zulässt.

10. Steuergerät nach Anspruch 8 oder 9, **dadurch gekennzeichnet, dass** der zweite Prozess zusammen mit den Anwendungsdaten ein anhand der Anwendungsdaten berechnetes Prüfdatum speichert.

11. Steuergerät nach Anspruch 10, **dadurch gekennzeichnet, dass** der zweite Prozess eingerichtet ist, das Prüfdatum anhand der gespeicherten Anwendungsdaten neu zu berechnen und die Ausführung des ersten Prozesses zu sperren, wenn das neu berechnete mit dem gespeicherten Prüfdatum nicht kompatibel ist.

12. Steuergerät nach einem der vorhergehenden Ansprüche, **dadurch gekennzeichnet, dass** der zweite Prozess die Integrität der Anwendungsdaten prüft und eine Beurteilung ihrer Güte nur durchführt, wenn die Integritätsprüfung anzeigt, dass die Anwendungsdaten verändert sind.
